# EUROPEAN PATENT APPLICATION

(11) **EP 3 579 552 A1**
(43) Date of publication of application: **11.12.2019**
(21) Application number: 19178818.1
(22) Date of filing: 06.06.2019
(51) Int. Cl.: H04N 13/31, H04N 13/368, H04N 13/315

(54) **STEERABLE VIEWING SYSTEM**

(30) Priority: 07.06.2018 US 201862682135 P
(71) Applicant: Bombardier Inc., Dorval, QC H4S 1Y9 (CA)
(72) Inventor: GHEORGHIAN, Victor Daniel, Montreal, Quebec H4E 4K9 (CA); GRANT, Robert C., Toronto, Ontario M6E 1J1 (CA)
(74) Representative: HGF Limited

(57) **Abstract**

A steerable viewing system and an associated method of operation are disclosed. The system comprises a steerable filter for placing in front of a display area of a display device and a controller for causing the steerable filter to define one or more viewing passages extending through the steerable filter and permitting viewing of the display area from a first position through the steerable filter and one or more viewing barriers preventing viewing of the display area from a second position different from the first position through the steerable filter. The viewing passages are defined by LCD elements of the steerable filter in the transmissive state. The viewing barriers are defined by LCD elements of the steerable filter in the light-blocking state.

## Description

### TECHNICAL FIELD

The disclosure relates generally to steerable viewing systems, and more particularly to a steerable filter for placing in front of a display area of a display device.

### BACKGROUND

Many places such as inside the passenger cabin of an aircraft provide limited space to install display devices for passenger entertainment. Providing individual passenger-dedicated display devices in aircraft can contribute to increased cost and weight added to the aircraft. In some aircraft a single shared display device can be provided to entertain all the passengers in the cabin or, in larger aircraft, an aircraft cabin may contain some shared display devices where each display device is associated with a group of passengers in the passenger cabin. In such arrangements, all of the passengers, or all of the passengers within a group, are limited to watching the same visual content displayed on the shared display device(s).

### SUMMARY

In one aspect, the disclosure describes a steerable viewing system comprising:
a steerable filter for placing in front of a display area of a display device, the steerable filter including a plurality of superimposed liquid crystal display (LCD) screens, each LCD screen including a plurality of LCD elements controllable between a transmissive state and a light-blocking state; and
a controller operatively coupled to the LCD screens of the steerable filter and configured to, using data indicative of a first position relative to the display area of the display device, cause the states of the LCD elements of the LCD screens to cooperatively define:
   a first viewing passage extending through the steerable filter and permitting viewing of the display area from the first position through the steerable filter, the first viewing passage being defined by LCD elements of the LCD screens in the transmissive state; and
   a first viewing barrier adjacent the first viewing passage and preventing viewing of the display area from a second position different from the first position through the steerable filter, the first viewing barrier being defined by LCD elements of the LCD screens in the light-blocking state.

The first viewing passage may have a passage axis extending through the LCD screens of the steerable filter and intersecting the first position. The first viewing barrier may have a barrier axis extending through the LCD screens of the steerable filter. The barrier axis may be substantially parallel to the passage axis.

The second position may be apart from the passage axis.

The first viewing passage may have a passage axis extending through the LCD screens of the steerable filter and intersecting the first position. The first viewing barrier may prevent viewing of the display area along a direction transverse to the passage axis.

The system may comprise a plurality of first viewing passages and a plurality of first viewing barriers. The first viewing passages and the first viewing barriers may be alternatingly disposed across at least part of the steerable filter.

The first viewing barrier may comprise one or more LCD elements in the light-blocking sate in each of the LCD screens.

The steerable filter may comprise between five and twenty superimposed LCD screens.

The steerable filter may comprise between ten and twenty superimposed LCD screens.

The steerable filter may be steerable in two axes.

The steerable filter may comprise between ten and forty superimposed LCD screens.

The steerable filter may comprise between twenty and forty superimposed LCD screens.

The controller may be configured to:
cease causing the states of the LCD elements of the LCD screens to cooperatively define the first viewing passage and the first viewing barrier; and
use data indicative of the second position to cause the states of the LCD elements of the LCD screens to cooperatively define:
   a second viewing passage extending through the steerable filter and permitting viewing of the display area from the second position through the steerable filter; and
   a second viewing barrier adjacent the second viewing passage and preventing viewing of the display area from the first position through the steerable filter.

The first viewing barrier may comprise a first string of LCD elements in the light-blocking state. The first string of LCD elements may be oriented horizontally relative to a first viewing orientation associated with the first position. The second viewing barrier may comprise a second string of LCD elements in the light-blocking state. The second string of LCD elements may be oriented horizontally relative to a second viewing orientation associated with the second position. The first viewing orientation associated with the first position may be different from the second viewing orientation associated with the second position.

The controller may be operatively coupled to the display device and may be configured to:
when the first viewing passage and the first viewing barrier are defined, cause the display area of the display device to display first visual content intended to be viewed from the first position; and
when the second viewing passage and the second viewing barrier are defined, cause the display area of the display device to display second visual content intended to be viewed from the second position.

The controller may be configured to cause the steerable filter to repeatedly alternate between:
a first mode of operation where the first viewing passage and the first viewing barrier are defined, and the first visual content is displayed in the display area; and
a second mode of operation where the second viewing passage and the second viewing barrier are defined, and the second visual content is displayed in the display area.

Repeatedly alternating between the first and second modes of operation may be conducted at a frequency that substantially prevents a perception of interruption of the first and second visual content by a human.

Repeatedly alternating between the first and second modes of operation may be conducted at a frequency that is equal to or greater than 50 Hz.

Repeatedly alternating between the first and second modes of operation may be conducted at a frequency that is between 50 Hz and 600 Hz.

The system may comprise one or more detectors for detecting a viewer at the first position.

The system may comprise one or more detectors for detecting glasses worn by a viewer at the first position.

The controller may be configured to:
receive data indicative of a first viewing orientation associated with the first position; and
cause the first viewing barrier to be oriented based on the first viewing orientation associated with the first position.

Embodiments can include combinations of the above features.

In another aspect, the disclosure describes a method of operating a steerable viewing system comprising a steerable filter disposed in front of a display area of a display device, the steerable filter including a plurality of superimposed liquid crystal display (LCD) screens, each LCD screen including a plurality of LCD elements controllable between a transmissive state and a light-blocking state. The method comprises:
using data indicative of a first position relative to the display area of the display device, causing the states of the LCD elements of the LCD screens to cooperatively define:
a first viewing passage extending through the steerable filter and permitting viewing of the display area from the first position through the steerable filter, the first viewing passage being defined by LCD elements of the LCD screens in the transmissive state; and
a first viewing barrier adjacent the first viewing passage and preventing viewing of the display area through the steerable filter from a second position different from the first position, the first viewing barrier being defined by LCD elements of the LCD screens in the light-blocking state.

The first viewing passage may have a passage axis extending through the LCD screens of the steerable filter and intersecting the first position. The first viewing barrier may have a barrier axis extending through the LCD screens of the steerable filter. The barrier axis may be substantially parallel to the passage axis.

The second position may be apart from the passage axis.

The first viewing passage may have a passage axis extending through the LCD screens of the steerable filter and intersecting the first position. The first viewing barrier may prevent viewing of the display area along a direction transverse to the passage axis.

The first viewing barrier may comprise one or more LCD elements in the light-blocking sate in each of the LCD screens.

The method may comprise:
ceasing to cause the states of the LCD elements of the LCD screens to cooperatively define the first viewing passage and the first viewing barrier; and
using data indicative of the second position to cause the states of the LCD elements of the LCD screens to cooperatively define:
   a second viewing passage extending through the steerable filter and permitting viewing of the display area from the second position through the steerable filter; and
   a second viewing barrier adjacent the second viewing passage and preventing viewing of the display area from the first position through the steerable filter.

The first viewing barrier may comprise a first string of LCD elements in the light-blocking state. The first string of LCD elements may be oriented horizontally relative to a first viewing orientation associated with the first position. The second viewing barrier comprises a second string of LCD elements in the light-blocking state. The second string of LCD elements may be oriented horizontally relative to a second viewing orientation associated with the second position. The first viewing orientation associated with the first position may be different from the second viewing orientation associated with the second position.

The method may comprise:
when the first viewing passage and the first viewing barrier are defined, cause the display area of the display device to display first visual content intended to be viewed from the first position; and
when the second viewing passage and the second viewing barrier are defined, cause the display area of the display device to display second visual content intended to be viewed from the second position.

The method may comprise causing the steerable filter to repeatedly alternate between:
a first mode of operation where the first viewing passage and the first viewing barrier are defined, and the first visual content is displayed in the display area; and
a second mode of operation where the second viewing passage and the second viewing barrier are defined, and the second visual content is displayed in the display area.

Repeatedly alternating between the first and second modes of operation may be conducted at a frequency that substantially prevents a perception of interruption of the first and second visual content by a human.

Repeatedly alternating between the first and second modes of operation may be conducted at a frequency that is equal to or greater than 50 Hz.

Repeatedly alternating between the first and second modes of operation may be conducted at a frequency that is between 50 Hz and 600 Hz.

Repeatedly alternating between the first and second modes of operation may comprise steering the steerable filter in two axes.

The method may comprise generating the data indicative of the first position by detecting a viewer at the first position.

The method may comprise generating the data indicative of the first position by detecting glasses worn by a viewer at the first position.

The method may comprise:
detecting a change in the first position by tracking a position of a viewer; and
causing adjustment of the first viewing passage and of the first viewing barrier to accommodate the change in the first position.

The method may comprise:
receiving data indicative of a first viewing orientation associated with the first position; and
causing the first viewing barrier to be oriented based on the first viewing orientation associated with the first position.

Embodiments can include combinations of the above features.

In a further aspect, the disclosure describes an aircraft including a system as disclosed herein.

Further details of these and other aspects of the subject matter of this application will be apparent from the detailed description included below and the drawings.

### DESCRIPTION OF THE DRAWINGS

Reference is now made to the accompanying drawings, in which:
FIG. 1 is a top plan view of an exemplary aircraft comprising a steerable viewing system;
FIG. 2 is a schematic representation of an exemplary embodiment of the steerable viewing system of FIG. 1;
FIG. 3 is a schematic representation of an exemplary controller of the steerable viewing system of FIG. 2;
FIG. 4A is a schematic representation of an exemplary steerable filter of the steerable viewing system of FIG. 2 in a first mode of operation permitting viewing of a display area from a first position;
FIG. 4B is a schematic representation of the steerable filter of FIG. 4A in a second mode of operation permitting viewing of the display area from a second position;
FIG. 4C is a schematic representation of the steerable filter of FIG. 4A in a third mode of operation permitting viewing of the display area from both the first and second positions;
FIG. 5A is a perspective schematic representation of the steerable filter of FIG. 4A permitting viewing of the display area from a front and center position;
FIG. 5B is a perspective schematic representation of the steerable filter of FIG. 4A permitting viewing of the display area from a right side position;
FIG. 6A is a schematic representation of another exemplary embodiment of the steerable filter of the steerable viewing system of FIG. 2;
FIG. 6B is a perspective schematic representation of the steerable filter of FIG. 6A;
FIG. 7A is a schematic representation of another exemplary embodiment of the steerable filter of the steerable viewing system of FIG. 2;
FIG. 7B is a perspective schematic representation of the steerable filter of FIG. 7A;
FIG. 8A is a perspective schematic representation of the steerable filter of FIG. 4A permitting viewing of the display area from a front and center position;
FIG. 8B is a perspective schematic representation of the steerable filter of FIG. 4A permitting viewing of the display area from a right upper position;
FIG. 9 is a schematic representation of an exemplary subsystem for detecting a viewer of the steerable viewing system; and
FIG. 10 is a flowchart illustrating a method for operating the steerable viewing system of FIG. 1.

### DETAILED DESCRIPTION

The following disclosure relates to steerable viewing systems and associated methods. In various embodiments, a steerable viewing system comprises a steerable filter (i.e., mask) that can be placed in front of a display area of a display device and that can be used to: controllably set one or more viewing directions along which the display area can be viewed through the steerable filter; and also to set one or more blocked directions along which the display area cannot be viewed through the steerable filter. In some embodiments, the steerable filter in conjunction with a display device can serve as a multi-view display device that allows multiple viewers at different positions to each view different visual content simultaneously on the same (i.e., common, shared) display device.

Aspects of various embodiments are described through reference to the drawings.

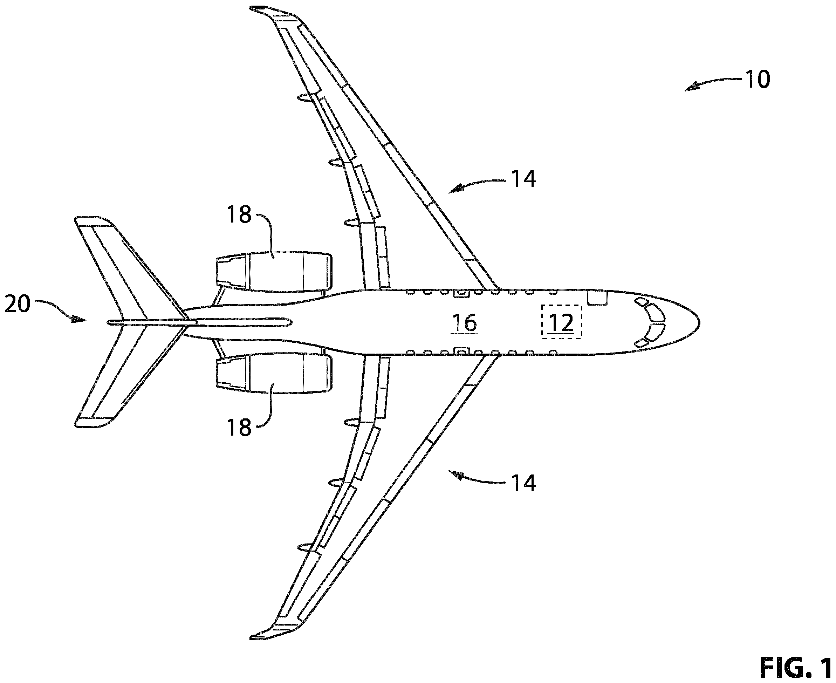

FIG. 1 is a top plan view of an exemplary aircraft 10, which comprises steerable viewing system 12 (hereinafter "system 12") as described herein. System 12 can be disposed inside a passenger cabin of aircraft 10 for viewing by one or more passengers of aircraft 10. Alternatively or in addition, system 12 can be part of a flight deck of aircraft 10 for viewing by one or more pilots of aircraft 10. Aircraft 10 can be any type of aircraft such as corporate (e.g., business jet), private, commercial and passenger aircraft suitable for civil aviation. For example, aircraft 10 can be a narrow-body, twin-engine jet airliner or can be an ultra-long range business jet. Aircraft 10 can be a fixed-wing aircraft. Aircraft 10 can comprise wings 14, fuselage 16, one or more engines 18 and empennage 20. Even though system 12 is shown as being part of aircraft 10 it is understood that system 12 can also be used in non-aircraft applications, such as but not limited to: automobiles, trains, ships, residences (homes) and viewing rooms for example.

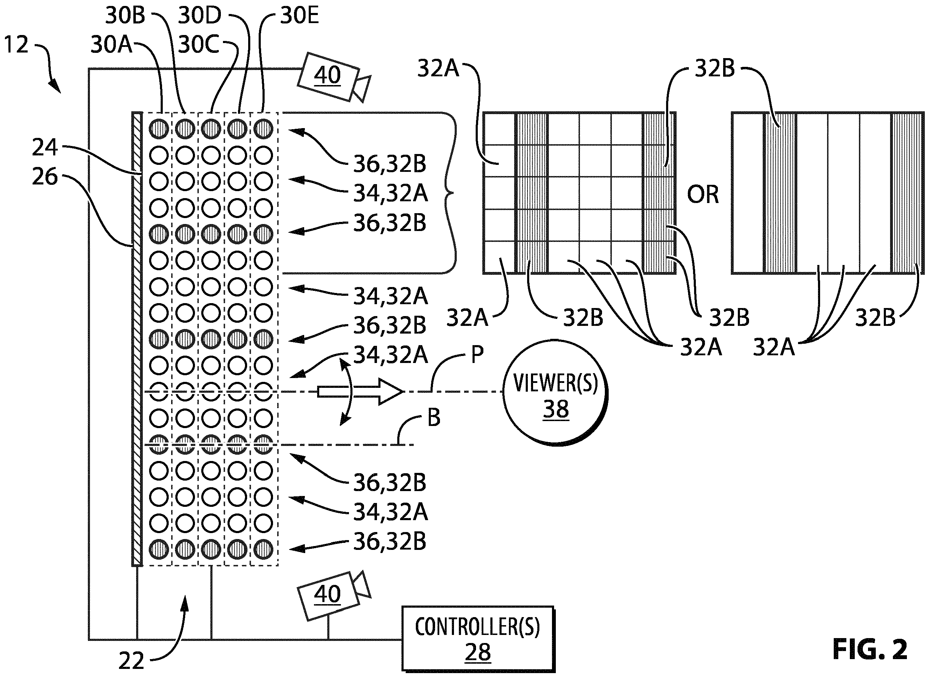

FIG. 2 is a schematic representation of steerable viewing system 12. System 12 can comprise steerable filter 22 for placing in front of display area 24 of display device 26, and one or more controllers 28 (referred hereinafter in the singular) operatively coupled to steerable filter 22. Steerable filter 22 can include a plurality of superimposed liquid crystal display (LCD) screens 30A-30E (referred generally as "LCD screens 30"). Each LCD screen 30 can include a plurality of LCD elements 32 controllable between a transmissive state (shown as LCD elements 32A) and a light-blocking state (shown as LCD elements 32B). The transmissive state of LCD elements 32A can correspond to a state where LCD elements 32A are substantially transparent. The light-blocking state of LCD elements 32B can correspond to a state where LCD elements 32B are substantially opaque.

LCD elements 32 can be pixels of LCD screens 30 and can be of the twisted nematic (TN) type for example. LCD elements 32 can comprise a layer of liquid crystal between two transparent electrodes and two polarizing filters. The axes of transmission of the two polarizing filters can be perpendicular to each other so that, without the liquid crystal between the polarizing filters, light passing through the first polarizing filter would be blocked by the second polarizing filter. By controlling the voltage applied across the liquid crystal via the electrodes in each LCD element 32, light can be allowed to pass through in varying amounts through the LCD element 32. For example, the state of each LCD element 32 can be individually controlled to be changed from the transmissive state to the light-blocking state by the application of a voltage across the liquid crystal via the electrodes of the applicable LCD element 32 for example.

LCD elements 32 can have a substantially symmetric (e.g., square, circular) shape or can have an elongated (e.g., rectangular) shape. In some embodiments, LCD elements 32 can have elongated shapes so that a single LCD element 32 can extend across an entire length or width of display area 24. Embodiments of steerable filter 22 having square and rectangular LCD elements are respectively illustrated as separate insets in FIG. 2. The insets show enlarged exemplary arrangements of LCD elements 32 of LCD screen 30E as viewed from a front side of steerable filter 22 (i.e., from the perspective of a viewer 38). Each LCD screen 30 can comprise a (e.g., 1-dimensional or 2-dimensional) array of LCD elements 32.

Controller 28 can be operatively coupled to LCD screens 30 of steerable filter 22 and configured to control the states of LCD elements 32 of LCD screens 30. In some embodiments, controlling LCD elements 32 can be achieved using an active matrix addressing scheme using thin-film transistors (TFTs) for example.

Steerable filter 22 can be configured to be placed in front of display area 24 of display device 26 and serve as a controllable mask for permitting viewing of display area 24 from one or more positions and preventing viewing of display area 24 from one or more other positions. Accordingly, LCD elements 32 of LCD screens 30 may not be configured to generate the visual content (e.g., still or moving images) themselves but instead be configured to either permit or block viewing of the visual content that is provided in display area 24 of display device 26. Accordingly, steerable filter 22 can be configured to be used in conjunction with another display device 26 that provides the visual content. In some embodiments, display device 26 can be a television configured for transmitting still or moving images. Display device 26 can comprise a flat-panel display such as an LCD display (fluorescent-backlit or light-emitting diodes (LED)), an organic light-emitting diodes (OLED) display or a plasma display for example. It is understood that the use of steerable filter 22 is not limited to any particular type(s) of display device 26.

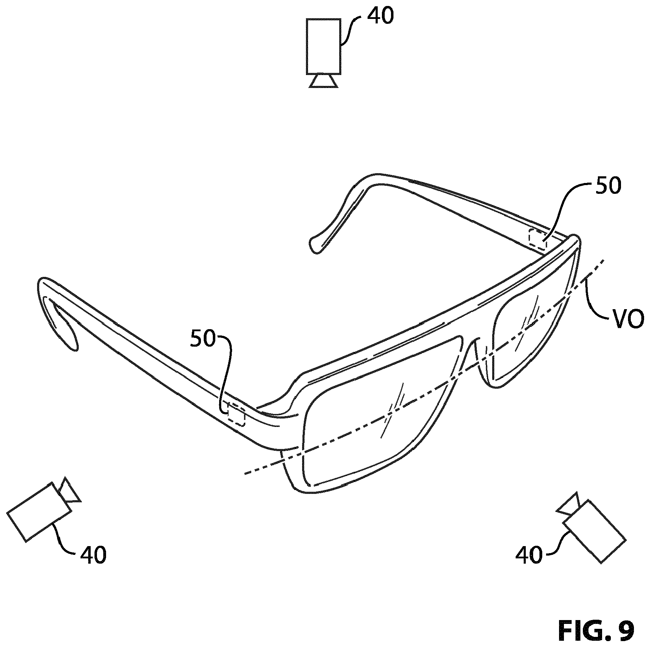

Viewing system 12 can comprise one or more detectors 40 that serve to determine a position of viewer(s) 38 for the purpose of controlling steerable filter 22 accordingly. In some embodiments, detectors 40 can also serve to determine a viewing orientation (e.g., see viewing orientation VO in FIG. 9) associated with one or more respective viewers. Detector(s) 40 can be operatively coupled to controller 28. In some embodiments, detector(s) 40 can comprise one or more cameras that are used in conjunction with viewer detection (e.g., feature/facial recognition) software that can be executed by controller 28. In some embodiments, detector(s) 40 can include two or more cameras that can be used to perform stereo imaging to determine and track the position(s) of viewer(s) 38. In some embodiments, detector(s) 40 can comprise one or more Wi-Fi transmitters that can be used to determine the position of one or more Wi-Fi antennas associated with viewer(s) 38 as explained further below. In some embodiments, a plurality of Wi-Fi transmitters can be used to perform triangulation to determine the position of one or more Wi-Fi antennas associated with viewer(s) 38.

The position(s) and optionally the viewing orientation associated with one or more viewers 38 can be used to control steerable filter 22 accordingly. In some embodiments, the position(s) of one or more viewers 38 can be tracked (within a viewing range of display area 24) substantially in real time and steerable filter 22 can be controlled accordingly (e.g., dynamically) to accommodate changes in the position(s) of viewer(s) 38. In some embodiments, using data indicative of a first position (e.g., of a viewer 38) relative to display area 24 of display device 26, controller 28 can cause the states of LCD elements 32 of LCD screens 30 to cooperatively define one or more viewing passages 34 extending through steerable filter 22 and one or more viewing barriers 36. Viewing passages 34 can be configured to permit viewing of display area 24 from the first position through steerable filter 22. Viewing passages 34 can be defined by LCD elements 32A of LCD screens 30 being in the transmissive state. For example, viewing passages 34 can each be defined by a group of neighbouring LCD elements 32A in the transmissive state and positioned to cooperatively define the viewing passage 34. In some embodiments, one or more viewing passages 34 can comprise LCD elements 32A from each LCD screen 30 of steerable filter 22 so that such viewing passages 34 can extend across the entire thickness of steerable filter 22. LCD elements 32A defining a viewing passage 34 can be generally arranged to form a string of one or more LCD elements 32A wide extending across the thickness (i.e., through all LCD screens 30), width and/or height of steerable filter 22.

Viewing barriers 36 can be disposed between viewing passages 34 and can prevent viewing of display area 24 through steerable filter 22 from a second position different from the first position. Viewing barriers 36 can be defined by LCD elements 32B of LCD screens 30 being in the light-blocking state. In some embodiments, one or more of viewing barriers 36 can each comprise one or more LCD elements 32B in the light-blocking sate in each of LCD screens 30 so that such viewing barriers 36 can extend across the entire thickness of steerable filter 22. LCD elements 32B defining a viewing barrier 36 can be generally arranged to form a string of one or more LCD elements 32B wide extending across the thickness (i.e., through all LCD screens 30), width and/or height of steerable filter 22. In some embodiments, a string of LCD elements 32A defining a viewing passage 34 can be substantially parallel to an adjacent string of LCD elements 32B defining a viewing barrier 36.

One or more viewing passages 34 can each have passage axis P extending through LCD screens 30 of steerable filter 22 and intersecting the first position as shown in FIG. 2. Passage axis P can correspond to a longitudinal axis of the corresponding viewing passage 34. Passage axis P can correspond to an intended viewing direction through viewing passage 34. In some embodiments, passage axis P of each viewing passage 34 of steerable filter 22 can be substantially parallel. Alternatively, in some embodiments, passage axis P of each viewing passage 34 can be oriented to intersect the first position so that passage axes P converge toward the first position.

Viewing barriers 36 can be disposed adjacent respective viewing passages 34. For example, in some embodiments of steerable filter 22, viewing passages 34 and viewing barriers 36 can be alternatingly disposed (intercalated) across at least part of steerable filter 22 as shown in FIG. 2. Viewing barriers 36 can each have a longitudinal barrier axis B extending through LCD screens 30 of steerable filter 22. In some embodiments, the passage axis P of a selected viewing passage 34 and the barrier axis B of an adjacent viewing barrier 36 can be substantially parallel.

The alternating arrangement of viewing passages 34 and viewing barriers 36 can function in a manner analogous to window blinds comprising vertical and/or horizontal slats (e.g., viewing barriers 36) that are spaced from each other by gaps (e.g., viewing passages 34) and that can be rotated (e.g., in unison) for changing the orientation(s) of (i.e., steer) viewing passages 34 based on the position(s) of one or more viewers 38. Viewing barriers 36 can prevent viewing of display area 24 through steerable filter 22 from a blocked position that is different from a desired viewing position. In reference to viewing passage 34 having passage axis P and to viewing barrier 36 having barrier axis B in FIG. 2, the blocked position can be a position that is apart from (i.e., that does not intersect) passage axis P. For example, viewing passages 34 and viewing barriers 36 can be configured to permit viewing through steerable filter 22 along passage axis P and also within a narrow angular range from passage axis P (e.g., sector of +/- one or more degrees or fractions of a degree from passage axis P radiating from display area 24). Accordingly, viewing barriers 36 can be configured to prevent viewing of display area 24 from positions that are outside of such sector. For example, viewing barriers 36 can be configured to prevent viewing of display area 24 along a direction that is transverse or at some non-zero angle (e.g., oblique) to passage axis P. For example, each viewing barrier 36 can be configured to prevent viewing of display area 24 along a direction that is transverse or at some non-zero angle (e.g., oblique) to its barrier axis B.

The angular viewing range or size of the viewing sector achievable using steerable filter 22 can depend on the configuration (e.g., size and shape of LCD elements 32, number of LCD screens 30) of steerable filter 22. For example, in some embodiments, increasing the number of stacked LCD screens 30 in steerable filter 22 may improve the steering accuracy of steerable filter 22. In some embodiments of steerable filter 22 configured for horizontal steering, an overall thickness of steerable filter 22 can be greater than a width of LCD elements 32 in the horizontal direction. In some embodiments of steerable filter 22 configured for vertical steering, an overall thickness of steerable filter 22 can be greater than a height of LCD elements 32 in the vertical direction. In embodiments intended for steering between two or more viewers, a wider angular viewing range (i.e., coarse steering) may be suitable. However, in embodiments intended to steer between two eyes of a same viewer to achieve stereo (i.e., 3D) viewing, a more narrow angular viewing range (i.e., fine steering) may be preferred.

Steerable filter 22 can comprise a plurality of LCD screens 30 mounted together to form a stack of LCD screens 30. For example, LCD screens 30 can be mounted without any significant space between them. For example, LCD screens 30 can be mounted so that adjacent LCD screens 30 in the stack contact each other. FIG. 2 shows steerable filter 22 comprising a stack of five LCD screens 30 however it is understood that steerable filter 22 could comprise fewer or more LCD screens 30 depending on factors such as the size and configuration of LCD elements 32, the desired configuration of viewing passages 34 and viewing barriers 36, the desired angular steering range and the desired steering precision of steerable filter 22 for example. In various embodiments disclosed herein, steerable filter 22 can comprise between three and five superimposed LCD screens 30. In some embodiments, steerable filter 22 can comprise between five and ten superimposed LCD screens 30. In some embodiments, steerable filter 22 can comprise between five and twenty superimposed LCD screens 30. In some embodiments, steerable filter 22 can comprise between ten and twenty superimposed LCD screens 30. In some embodiments, steerable filter 22 can comprise ten superimposed LCD screens 30. In some embodiments, steerable filter 22 can comprise between five and forty superimposed LCD screens 30. In some embodiments, steerable filter 22 can comprise between twenty and forty superimposed LCD screens 30. In some embodiments, steerable filter 22 can comprise between ten and forty superimposed LCD screens 30. In some embodiments, steerable filter 22 can comprise less than forty superimposed LCD screens 30. In some embodiments, steerable filter 22 can comprise twenty superimposed LCD screens 30.

The outer edges of steerable filter 22 is shown as being substantially aligned (e.g., flush) with the outer edges of display device 26 or of display area 24. However, it is understood that steerable filter 22 can extend beyond the boundaries of display area 24 or of display device 26 in order to selectively block the edges of display device 26 for example. In some embodiments, steerable filter 22 can be configured to extend beyond the right, left, top and/or bottom edges of display device 26 by an amount equivalent to about a thickness of steerable filter 22.

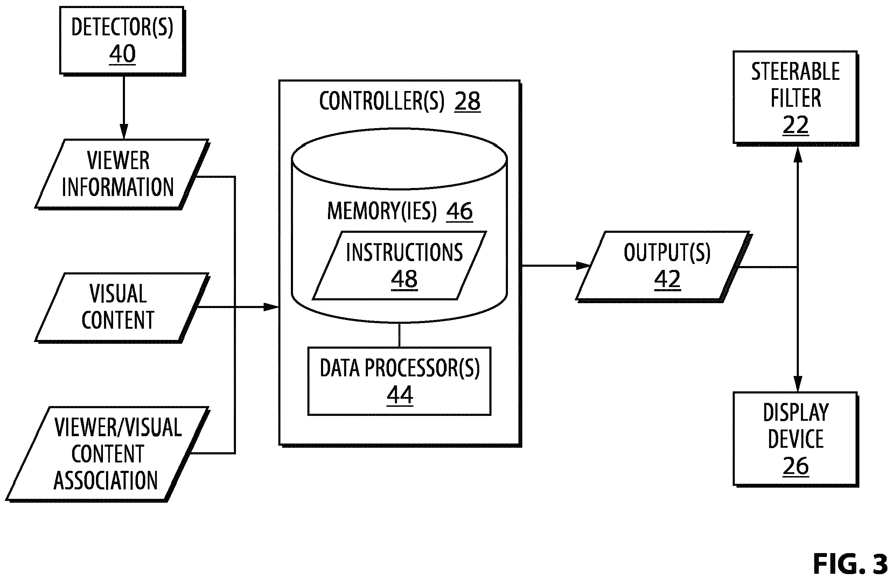

FIG. 3 is a schematic representation of an exemplary controller 28 of steerable viewing system 12. Controller 28 can be operatively coupled to steerable filter 22 for controlling the operation of steerable filter 22 by controlling the states of individual LCD elements 32 of LCD screens 30 via output(s) 42. Controller 28 can be operatively coupled to display device 26 to also control the visual content that is displayed in display area 24 of display device 26 via output(s) 42. In some embodiments as explained below, controller 28 can be configured to synchronize the operation of steerable filter 22 and of display device 26 to permit multiple viewers 38 at different positions to each watch different visual content simultaneously on the same (i.e., common) display device 26.

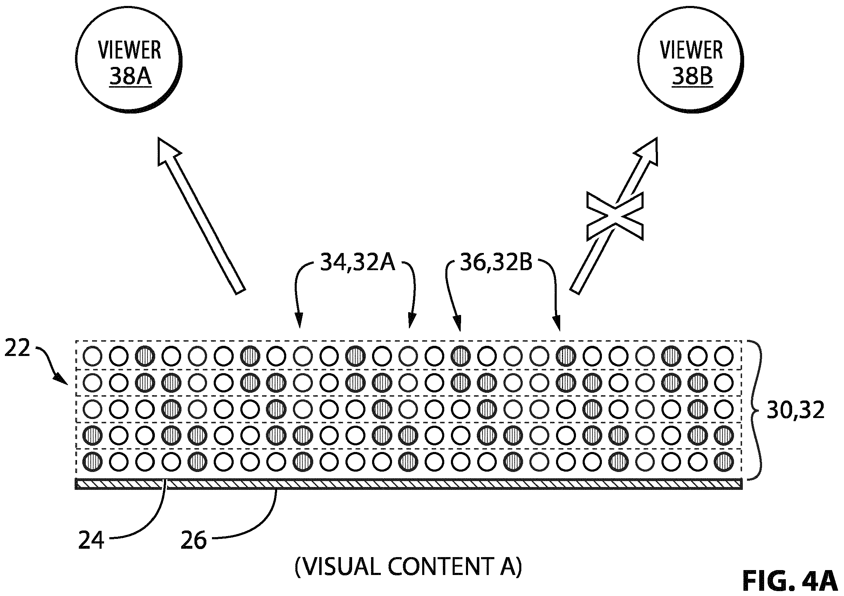

Controller 28 can be operatively coupled to receive data indicative of positions and optionally orientations of viewer(s) 38 directly or indirectly from one or more suitable data sources such as detectors 40 for example. Controller 28 can also be operatively coupled to receive data indicative of visual content from one or more suitable data sources for the purpose of controlling display device 26 accordingly. Alternatively, such data indicative of visual content can be provided directly to display device 26 and controller 28 can instruct display device 26 as to which visual content to be displayed at what time for synchronizing with steerable filter 22. Controller 28 can also receive data indicative of an association between viewers 38 and visual content so that each viewer 38 can be associated with respective visual content. For example, a first viewer 38 (see FIGS. 4A-4C) can be associated with first visual content relating to sport-related news, a second viewer 38 can be associated with second visual content relating to a movie and a third viewer 38 can be associated with visual content relating to a symphonic concert. Such association between viewers 38 and visual content can be provided to controller 28 via suitable viewer input device(s).

Controller 32 can comprise one or more data processors 44 and one or more computer-readable memories 46 storing machine-readable instructions 48 executable by the data processor(s) 44 and configured to cause controller 28 to perform a series of steps so as to implement a computer-implemented process such that instructions, when executed by such data processor(s) 44 or other programmable apparatus, can cause the functions/acts specified in the methods described herein to be executed. Memory(ies) 46 can comprise any storage means (e.g. devices) suitable for retrievably storing machine-readable instructions 48 executable by data processor(s) 44 of controller 28.

Various aspects of the present disclosure can be embodied as systems, devices, methods and/or computer program products. Accordingly, aspects of the present disclosure can take the form of an entirely hardware embodiment, an entirely software embodiment or an embodiment combining software and hardware aspects. Furthermore, aspects of the present disclosure can take the form of a computer program product embodied in one or more non-transitory computer readable medium(ia) having computer readable program code embodied thereon. The computer program product can, for example, be executed by controller 28 to cause the execution of one or more methods disclosed herein in entirety or in part. It is understood that, based on the present disclosure, one skilled in the relevant arts could readily write computer program code for implementing the methods disclosed herein.

FIGS. 4A-4C are schematic representations of an exemplary steerable filter 22 of system 12 in three respective modes of operation that permit viewing of display area 24 of display device 26 from different positions at different instants. It is understood that steerable filter 22 can be controlled to accommodate one, two, three or more viewing positions for multi-view operation.

At the instant illustrated in FIG. 4A, steerable filter 22 is configured to define viewing passages 34 that extend through steerable filter 22 and permit viewing of display area 24 from the position of viewer 38A through steerable filter 22. At this instant, display device 26 displays visual content A (e.g., sports-related news) intended to be viewed by viewer 38A. Viewing barriers 36 are configured to prevent viewing of display area 24 from the positions of viewer 38B through steerable filter 22.

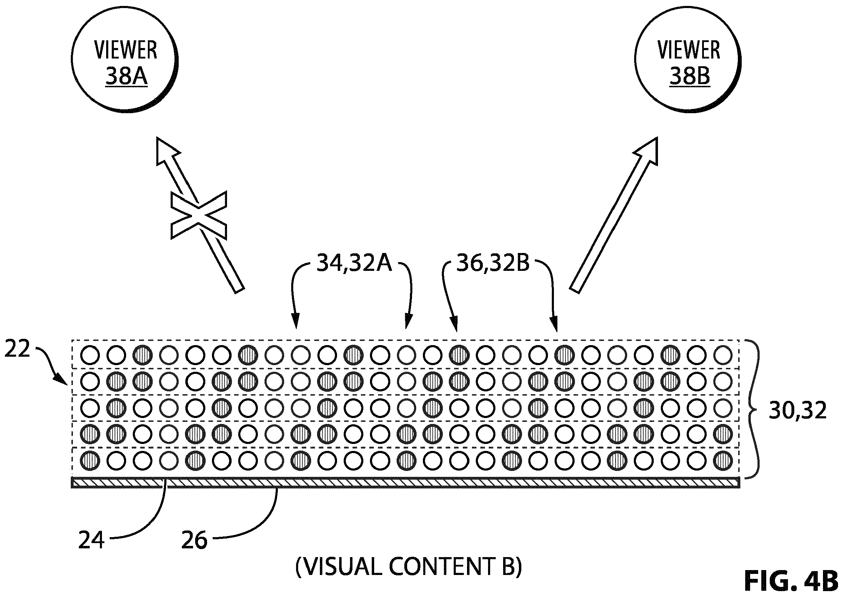

At the instant illustrated in FIG. 4B, steerable filter 22 is configured to define viewing passages 34 that extend through steerable filter 22 and permit viewing of display area 24 from the position of viewer 38B through steerable filter 22. At this instant, display device 26 displays visual content B (e.g., movie) intended to be viewed by viewer 38B. Viewing barriers 36 are configured to prevent viewing of display area 24 from the positions of viewer 38A through steerable filter 22.

As shown in FIGS. 4A and 4B, the operation of steerable filter 22 and display device 26 can be synchronized via controller 28 to permit multiple viewers 38 at different positions to each watch different visual content seemingly simultaneously using a common display device 26.

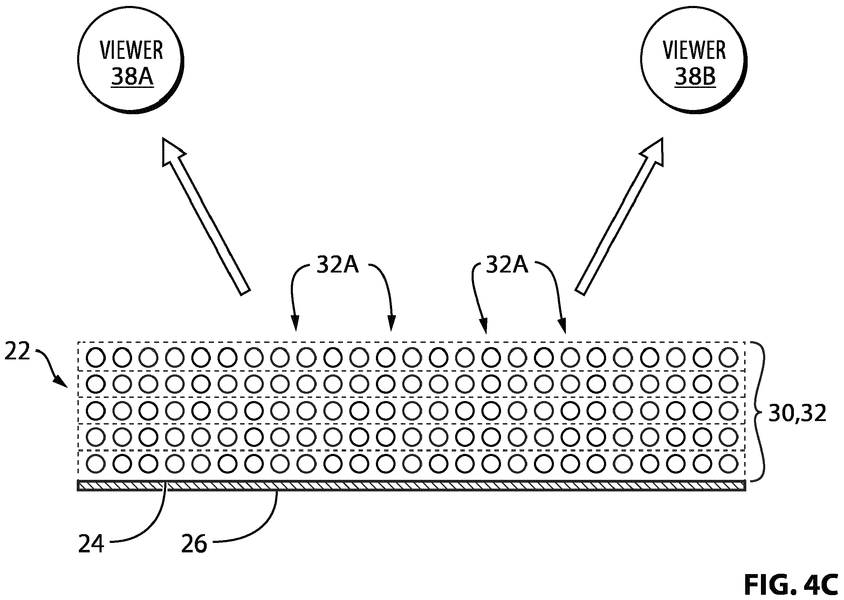

In the configuration illustrated in FIG. 4C, steerable filter 22 is configured to be entirely transparent where all LCD elements 32 are in the transmissive state to permit viewing of display area 24 from the position of viewers 38A and 38B through steerable filter 22. Display device 26 can also show the same visual content intended for both viewers 38A and 38B simultaneously and continuously without steering. No viewing barriers 36 are provided by steerable filter 22 configured as shown in FIG. 4C.

In some embodiments, the operation of steerable filter 22 illustrated at different instants in FIGS. 4A and 4B can be used to actively steer a viewing direction defined by steerable filter 22 to accommodate movement of a single viewer 38 relative to display area 24 where the substantially real-time position of viewer 38 can be tracked via detectors 40 for example. In this mode of operation display device 26 can continuously display the visual content intended to be viewed by the single viewer 38 and steerable filter 22 can be dynamically reconfigured as needed based on the tracked position of the single viewer 38. While steerable filter 22 is accommodating the movement of the single viewer 38, steerable filter 22 can block other positions that are different from the position of single viewer 38 from having viewing access to the visual content shown in display area 24.

Tracking the movement of one or more viewers 38 and adjusting the steerable filter 22 and visual content displayed by display device 26 could be used in installations inside aircraft 10 where system 12 is used to replace one or more windows of aircraft 10. For example, movement of a viewer 38 inside a passenger cabin of aircraft 10 could be tracked via detector(s) 40 and the visual content could be indicative of an environment outside of aircraft 10 so that as the passenger walks by display area 24 inside the passenger cabin, the behaviour of system 12 would provide the perception of walking by a window to the exterior of aircraft 10. Such visual content could be acquired via one or more cameras capturing the environment external to aircraft 10 or could be artificial. In any case, the reduction in the number of windows in an aircraft cabin could be desirable and simplify the structural design of aircraft fuselages.

It is understood that real-time position tracking of viewers 38 and corresponding dynamic adjustment of steerable filter 22 can also be used for multi-view operation of steerable filter 22 and display device 26. For example, for multi-view operation, controller 28 can be configured (e.g., via instructions 48) to cause steerable filter 22 to repeatedly alternate between two or more modes of operation depending on the number of viewers 38 participating in the multi-view operation. In reference to FIG. 4A where two viewers 38A and 38B are participating, a first mode of operation associated with viewer 38A can correspond to viewing passages 34 and viewing barriers 36 being defined to accommodate the position of viewer 38A, and visual content A being displayed in display area 24. In reference to FIG. 4B, a second mode of operation associated with viewer 38B can correspond to viewing passages 34 and viewing barriers 36 being defined to accommodate the position of viewer 38B, and visual content B being displayed in display area 24.

The multi-view operation can be achieved by repeatedly alternating between the different modes of operation illustrated in FIGS. 4A and 4B at a suitable frequency that reduces or substantially prevents a perception of interruption by a human so that the viewing of respective visual content by each viewer 38 is not perceived to be disrupted by the viewing of the other one or more viewers 38. In some embodiments where two viewers 38 are involved in a multi-view operation, the repeated alternating between a first mode of operation (e.g., shown in FIG. 4A) and a second mode of operation (e.g., shown in FIG. 4B) can be conducted at a frequency of about 60 Hz or greater for example. In this case, each of the two viewers 38 would see his/her respective visual content at a refresh rate of about 30 Hz or greater. In some embodiments where two viewers 38 are involved in a multi-view operation, the alternating frequency can be equal to or greater than 50 Hz for example so that each of the two viewers 38 sees his/her respective visual content at a refresh rate of 25 Hz or greater. In some embodiments where three viewers 38 are involved in a multi-view operation, the alternating frequency can be about 90 Hz so that each of the three viewers 38 sees his/her respective visual content at a refresh rate of about 30 Hz. It is understood that the alternating frequency can be selected based on the number of viewers participating in the multi-viewing activity. In various embodiments, the alternating frequency can be between 50 Hz and 600 Hz or higher. In some embodiments, the alternating frequency can be up to 720 Hz.

In some embodiments where three viewers 38 are involved in a multi-view operation and a refresh rate of display device 26 is 150 Hz, then three visual contents A, B and C could be displayed seemingly simultaneously to each of the three viewers 38 at a refresh rate of 50 Hz for example. At individual refresh rates of 50 Hz or higher no image interruption would be perceived by each of the three human viewers 38. For cases where display device 26 is capable of supporting higher refresh rates, then one or more additional viewers 38 could potentially be supported in multi-view operation of system 12 where each viewer is receiving his/her visual content at a refresh rate of 50 Hz or higher for example.

Even though the above description relates to controlling steerable filter 22 based on positions(s) of one or more viewers 38, it is understood that the same approach could be used to control steerable filter 22 based on the positions of each eye of one or more viewers to achieve three-dimensional viewing. For example, repeatedly alternating between a first mode of operation (steering and visual content) for a first (e.g., right) eye of viewer 38 and a second mode of operation (steering and visual content) for a second (e.g., left) eye of viewer 38 could be used to achieve a stereoscopic effect perceived by viewer 38.

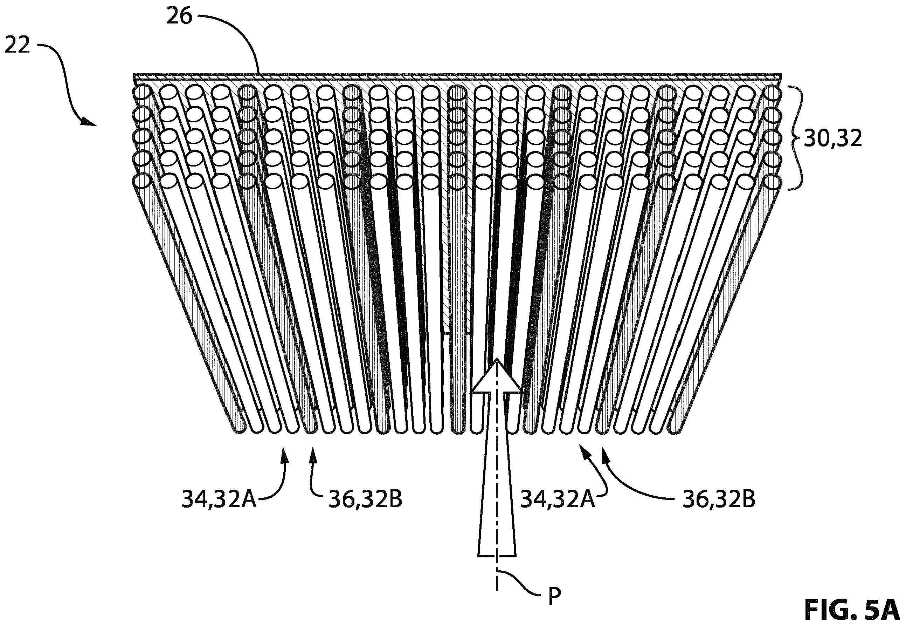

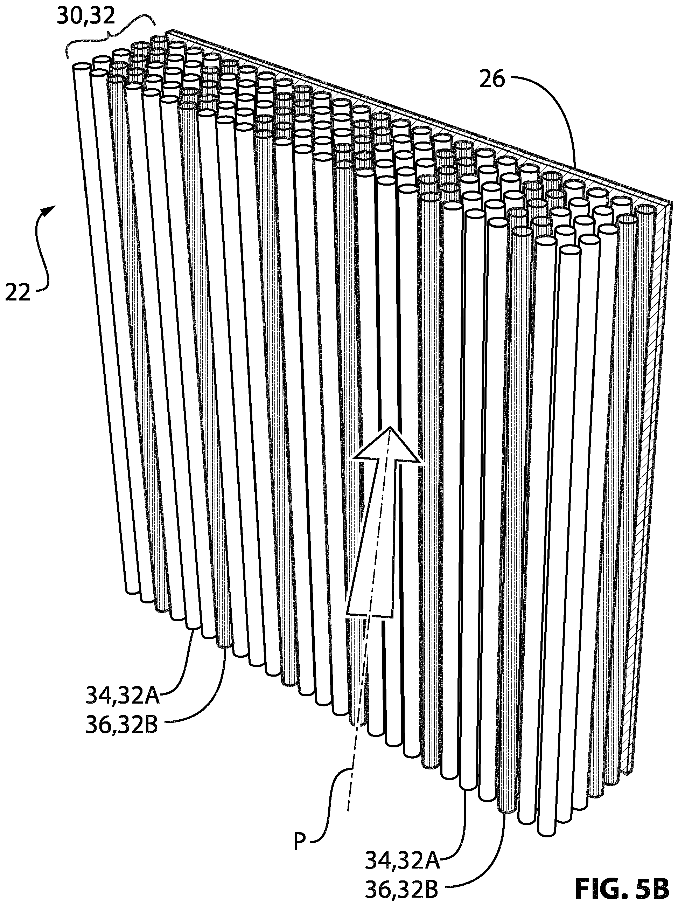

FIGS. 5A and 5B are perspective schematic representations of steerable filter 22 permitting viewing of the display area 24 from a center position and from a right side position respectively. Respective passage axes P (described above in relation to FIG. 2) are also shown in FIGS. 5A and 5B. For the purpose of illustrating the "window blind" effect achieved by controlling the states of LCD elements 32, FIGS. 5A and 5B show white tubular elements to depict either columns of LCD elements 32 or individual elongated LCD elements 32 in a transmissive state to define columnar viewing passages 34, and, dark tubular elements to depict either columns of LCD elements 32 or individual elongated LCD elements 32 in a light-blocking state to define columnar viewing barriers 36.

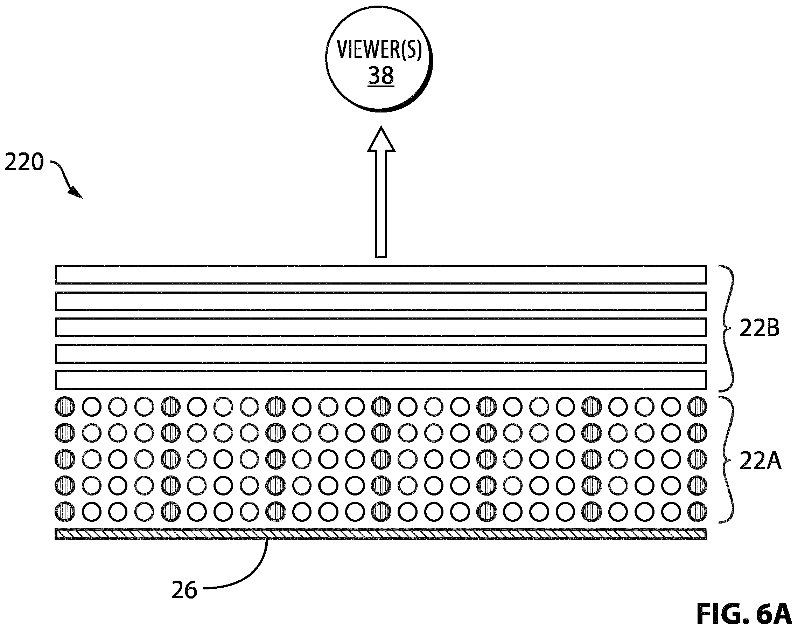

FIG. 6A is a schematic representation of another exemplary embodiment of steerable filter 220 configured to perform steering in two axes so that both vertical and horizontal positions of different viewers 38 can be accommodated by steerable filter 220 for example. In one embodiment, steerable filter 220 can comprise two steerable filters 22 of the type shown in FIG. 2 where steerable filter 22B overlays another steerable filter 22A. Accordingly, steerable filter 220 can comprise two superimposed sets of LCD screens 30 where one set of LCD screens 30 is operated as explained above and shown in FIGS. 4A-4B to achieve horizontal (i.e., side-to-side) steering and the other set of LCD screens 30 is operated in a similar manner except at an orientation perpendicular to the first set of LCD screens 30 in order to achieve vertical (i.e., up-down) steering. One of steerable filters 22A and 22B can be dedicated to horizontal steering and the other of steerable filters 22A and 22B can be dedicated to vertical steering. The combination of two sets of LCD screens 30 can permit diagonal steering of a viewing direction between viewers 38 for example. In some embodiments, steerable filters 22, 220 configured for dual-axis steering may comprise a larger number of LCD screens 30 than steerable filters 22 configured for single-axis steering.

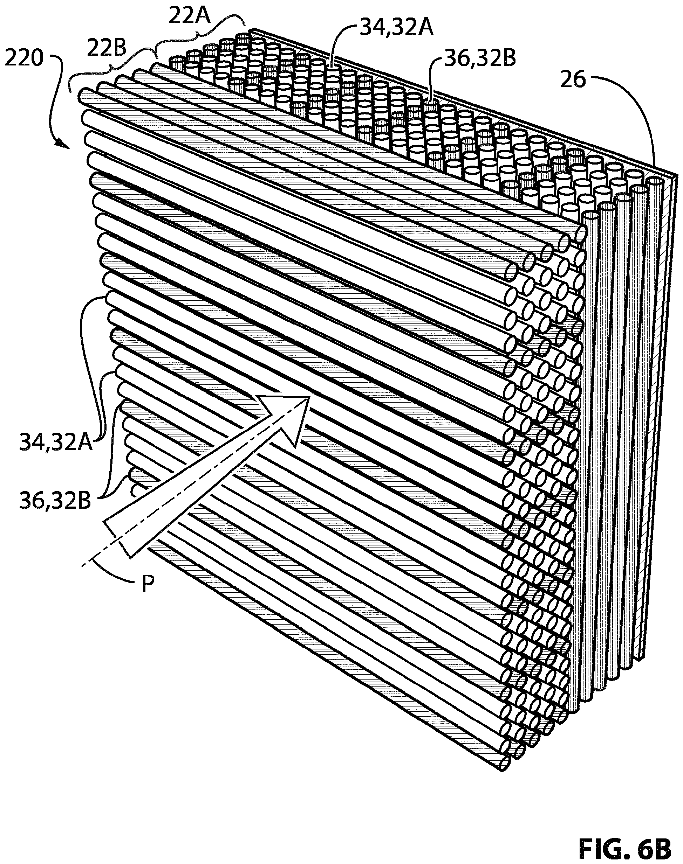

FIG. 6B is a perspective schematic representation of steerable filter 220 of FIG. 6A. White tubular elements depict either columns of LCD elements 32 or individual elongated LCD elements 32 in a transmissive state to define vertical or horizontal elongated viewing passages 34, and, dark tubular elements depict either columns of LCD elements 32 or individual elongated LCD elements 32 in a light-blocking state to define vertical or horizontal elongated viewing barriers 36. The alternating arrangement of viewing passages 34 and viewing barriers 36 in steerable filter 22A can function in a manner analogous to window blinds comprising vertical slats (e.g., viewing barriers 36) that are spaced from each other by gaps (e.g., viewing passages 34) and that can be rotated (e.g., in unison) to achieve horizontal steering. Similarly, the alternating arrangement of viewing passages 34 and viewing barriers 36 in steerable filter 22B can function in a manner analogous to window blinds comprising horizontal slats (e.g., viewing barriers 36) that are spaced from each other by gaps (e.g., viewing passages 34) and that can be rotated (e.g., in unison) to achieve vertical steering.

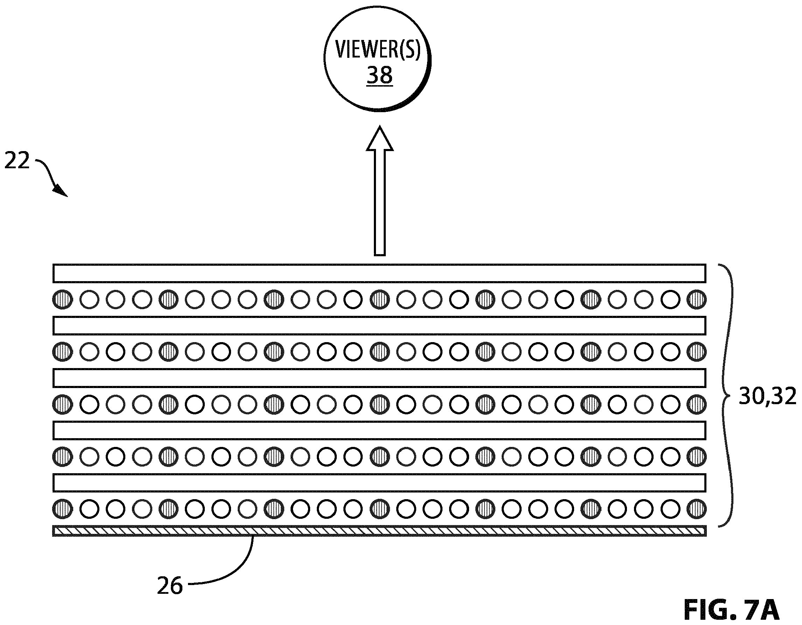

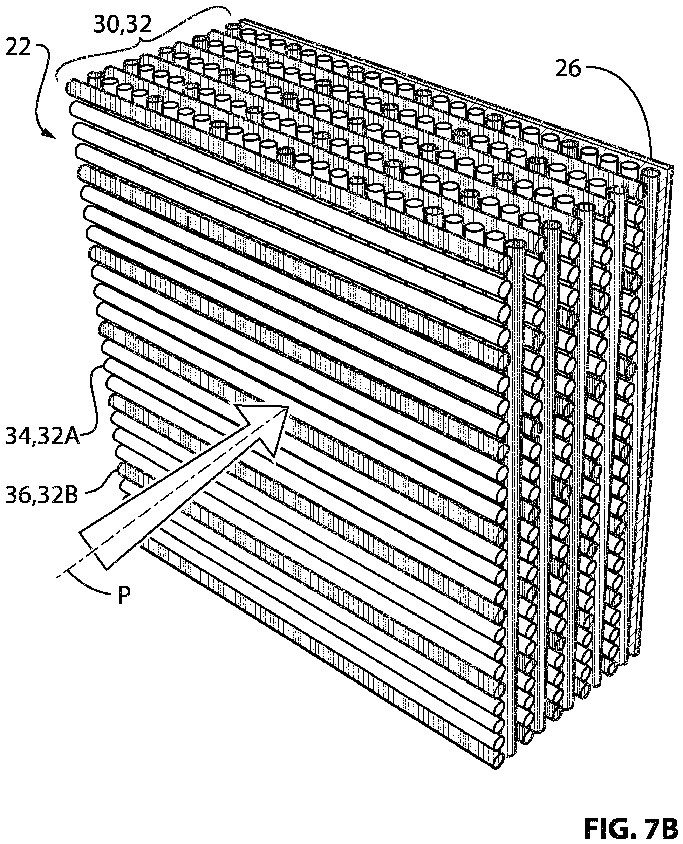

FIG. 7A is a schematic representation of another exemplary embodiment of steerable filter 22. FIG. 7B is a perspective schematic representation of steerable filter 22 of FIG. 7A. In contrast with steerable filter 220 of FIGS. 6A and 6B, steerable filter 22 of FIG. 7A can use a number of LCD screens 30 equivalent to two sets of steerable filters 22A and 22B but the LCD screens 30 dedicated to horizontal and vertical steering can be alternatingly disposed (intercalated) across the thickness of steerable filter 22. The function of steerable filter 22 of FIGS. 7A and 7B can be similar to that of steerable filter 220 except that, instead of being positioned one in front of the other, the vertical and horizontal slats of the window blinds defined by the viewing passages 34 and viewing barriers 36 are blended together.

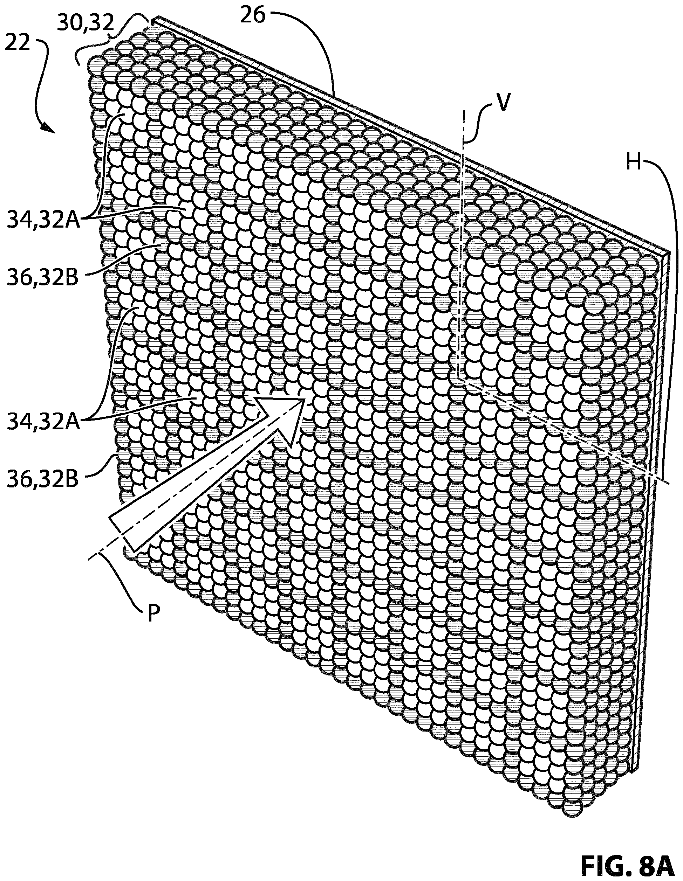

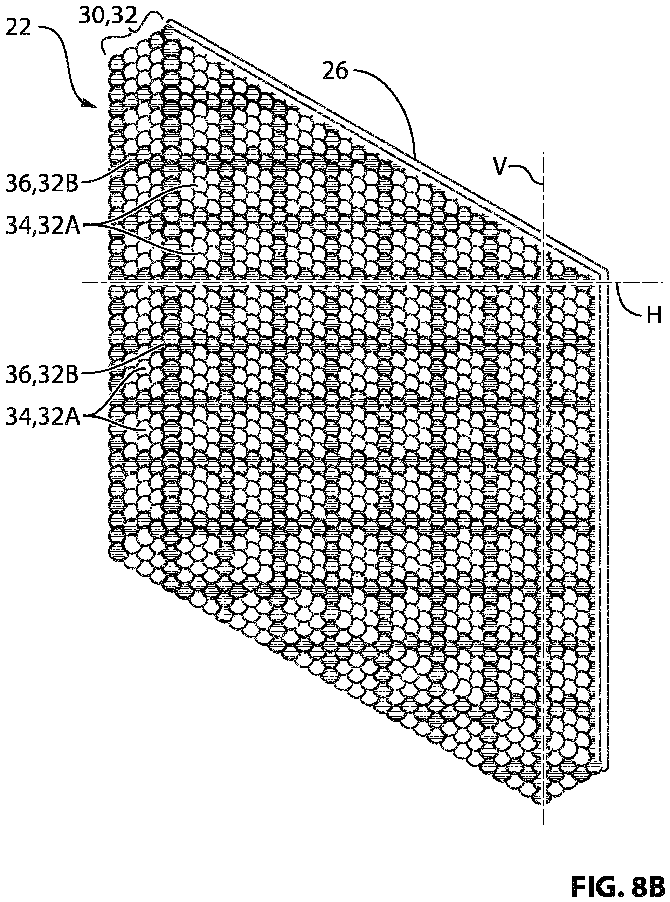

FIGS. 8A and 8B are perspective schematic representations of another exemplary embodiment of steerable filter 22. FIG. 8A shows an instant where the viewing direction (e.g., axis P) is perpendicular to display device 26 and FIG. 8B shows an instant where the viewing direction (e.g., axis P) is oriented diagonally toward a right upper viewpoint relative to display device 26 where such viewpoint corresponds to the viewpoint of FIG. 8B. White spherical elements depict LCD elements 32 in a transmissive state to define vertical or horizontal elongated viewing passages 34, and, dark spherical elements depict LCD elements 32 in a light-blocking state to define vertical or horizontal elongated viewing barriers 36.

The structural arrangement of steerable filter 22 of FIGS. 8A and 8B can be generally similar to that of FIG. 2 however LCD screens 30 can be controlled to define viewing passages 34 and viewing barriers 36 in a manner that is based on the viewing position and orientation. For example, instead of having individual LCD screens 30 dedicated to either horizontal or vertical steering, LCD screens 30 can be used for vertical and/or horizontal steering depending on the position of the applicable viewer(s) 38. In some embodiments, the orientation of the horizontal window blind slats defined by viewing barriers 36 can be set based on a position and viewing orientation associated with the applicable viewer's viewpoint in order to be oriented along a horizontal direction H relative to the applicable viewer 38 as opposed to being horizontal relative to display device 26. Similarly, the orientation of the vertical window blind slats defined by viewing barriers 36 can be set based on the position and viewing orientation associated with the applicable viewer's viewpoint in order to be oriented along a vertical direction V relative to the applicable viewer's viewpoint as opposed to being vertical relative to display device 26.

In FIG. 8A, horizontal viewing barriers 36 can comprise horizontal and vertical strings of LCD elements in the light-blocking state disposed in an outermost LCD screen 30E (see FIG. 2) where the horizontal direction H and vertical direction V are relative to the viewing orientation associated with a viewing position directly in front of display device 26. In FIG. 8B, horizontal viewing barriers 36 can comprise horizontal and vertical strings of LCD elements in the light-blocking state disposed in an outermost LCD screen 30E (see FIG. 2) where the horizontal direction H and vertical direction V are relative to the viewing orientation associated with a viewing position that is to the right and up relative to display device 26. In some embodiments, the orientation of viewing passages 34 and viewing barriers 36 based on the viewing orientation can provide improved image quality perceived by the applicable viewer(s) 38.

FIG. 9 is a schematic representation of an exemplary subsystem for detecting one or more positions of and optionally one or more viewing orientations VO associated with a viewer 38 for use with system 12. In some embodiments, the subsystem can include detectors 40 that can comprise wireless signal transmitters that can interact with one or more antennas 50 mounted to or otherwise incorporated with glasses worn by viewer 38. In some embodiments, detectors 40 can comprise Wi-Fi transmitters (e.g., Wi-Fi access points) and antennas 50 can comprise Wi-Fi antennas (e.g., Wi-Fi client). The use of a plurality of signal transmitters 40 located at different positions in combination with the one or more antennas 50 can permit the position(s) of the one or more antennas 50 to be determined by triangulation. In other words, the subsystem can function similarly to a global positioning system (GPS). Such triangulation can be performed using suitable processing device(s) operatively coupled to antennas 50 and integrated with glasses 52. Glasses 52 can also be configured to (e.g., wirelessly via other Wi-Fi transmitter(s)) communicate their position to controller 28 via antennas 50 and detectors 40 for example. Accordingly, a suitable power source (e.g., battery) can be operatively coupled to one or more devices of glasses 52. The subsystem of FIG. 9 can be operatively coupled to controller 28. It is understood that a general position of each viewer 38 wearing glasses 52 could be detected and/or tracked using this subsystem. Also, the use of two antennas 50 each mounted on an opposite side of glasses 52 can permit the position of each eye and hence a viewing orientation VO of a viewer 38 to be determined (i.e., inferred) and/or tracked for the purpose of controlling steerable filter 22 and display device 26 accordingly.

In various embodiments, the viewing orientation VO associated with viewer 38 can be detected using detector(s) 40 for example or can be predetermined based on the viewing position. The viewing orientation VO as shown in FIG. 9 can be represented by a line intersecting both eyes of viewer 38 and lying in a horizontal plane relative to viewer 38. In reference to FIG. 3, predetermined viewing orientations VO can be stored in memory 46 for different possible viewing positions. For example, an expected viewing orientation VO can be predetermined for one or more respective potential viewing positions and retrievably stored in a look-up table for use by controller 28 based on the detected viewing position(s). In reference to FIGS. 8A and 8B, steerable filter 22 can, in some embodiments, control the orientation of viewing barriers 36 so that their horizontal direction H is substantially parallel to viewing orientation VO shown in FIG. 9.

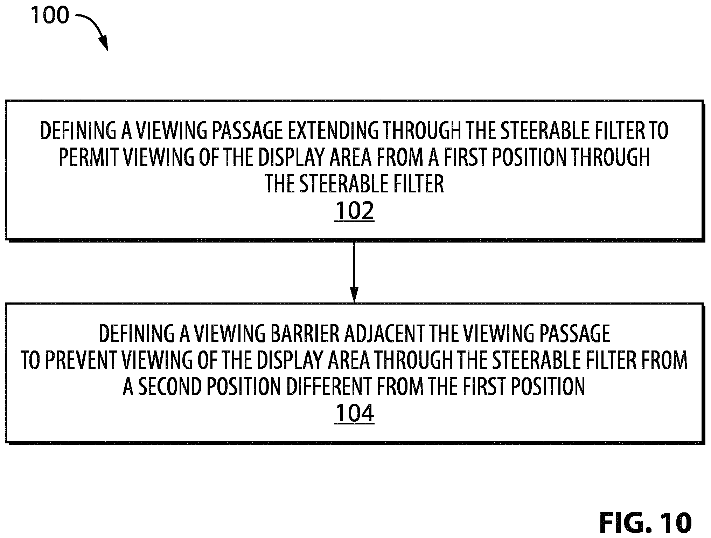

FIG. 10 is a flowchart illustrating method 100 for operating a steerable viewing system comprising steerable filter 22 disposed in front of a display area 24 of display device 26. Method 100 can be performed using system 12 as described above or using another suitable system. Method 100 can be computer-implemented via controller 28 for example by way of suitable machine-readable instructions 48. In various embodiments, method 100 can comprise:
using data indicative of a first position relative to display area 24 of display device 26, causing the states of LCD elements 32 of LCD screens 30 to cooperatively define:
   first viewing passages 34 (see FIG. 4A) extending through steerable filter 22, 220 and permitting viewing of display area 24 from the first position through steerable filter 22, 220, the first viewing passages 34 being defined by LCD elements 32A of the LCD screens 30 in the transmissive state (see block 102); and
   first viewing barriers 36 (see FIG. 4A) disposed between first viewing passages 34 and preventing viewing of display area 24 through steerable filter 22, 220 from a second position different from the first position, first viewing barriers 36 being defined by LCD elements 32B of LCD screens 30 in the light-blocking state.

In some embodiments of method 100, one of first viewing passages 34 has passage axis P (see FIG. 2) extending through the LCD screens 30 of steerable filter 22, 220 and intersecting the first position. One of first viewing barriers 36 disposed adjacent the one first viewing passage 34 can have a barrier axis B (see FIG. 2) extending through LCD screens 30 of steerable filter 22, 220. Barrier axis B can be substantially parallel to passage axis P. The second (i.e., blocked) position can be apart (e.g., distal) from passage axis P.

In some embodiments of method 100, one of first viewing passages 34 has passage axis P extending through LCD screens 30 of steerable filter 22, 220 and intersecting the first position. The viewing barriers 36 can prevent viewing of display area 24 along a direction transverse or oblique to passage axis P.

First viewing passages 34 and first viewing barriers 36 can be alternatingly disposed across at least part of steerable filter 22, 220. One or more of first viewing barriers 36 can each comprise one or more LCD elements 32B in the light-blocking sate in each of LCD screens 30.

In some embodiments, method 100 can comprise:
ceasing to cause the states of LCD elements 32 of LCD screens 30 to cooperatively define first viewing passages 34 and first viewing barriers 36; and
using data indicative of the second position, cause the states of the LCD elements 32 of LCD screens 30 to cooperatively define:
   second viewing passages 34 (see FIG. 4B) extending through steerable filter 22, 220 and permitting viewing of display area 24 from the second position through steerable filter 22, 220; and
   second viewing barriers 36 (see FIG. 4B) disposed between second viewing passages 34 and preventing viewing of display area 24 from the first position through steerable filter 22, 220.

In some embodiments of method 100, first viewing barrier 36 can comprise a first string of LCD elements 32B in the light-blocking state where the first string of LCD elements 32B is oriented horizontally relative to a first viewing orientation VO associated with the first position (see FIG. 8A). The second viewing barrier 36 can comprise a second string of LCD elements 32B in the light-blocking state where the second string of LCD elements 32B is oriented horizontally relative to a second viewing orientation VO associated with the second position (see FIG. 8B). The first viewing orientation VO associated with the first position can be different from the second viewing orientation VO associated with the second position.

As explained above, the operation of steerable filter 22, 220 can be synchronized with the operation of display device 26. Accordingly, when first viewing passages 34 and first viewing barriers 36 are defined as shown in FIG. 4A, method 100 can comprise causing display area 24 of display device 26 to display visual content A intended to be viewed from the first position. Similarly, when second viewing passages 34 and second viewing barriers 36 are defined as shown in FIG. 4B, method 100 can comprise causing display area 24 of display device 26 to display visual content B intended to be viewed from the second position.

Method 100 can comprise causing steerable filter 22, 220 to repeatedly alternate between: a first mode of operation where first viewing passages 34 and first viewing barriers 36 are defined, and visual content A is displayed in display area 24; and a second mode of operation where second viewing passages 34 and second viewing barriers 36 are defined, and visual content B is displayed in display area 24. Repeatedly alternating between the first and second modes of operation can be conducted at a frequency that reduces or substantially prevents a perception of interruption of visual content A or B by a human as explained above.

In some embodiments, method 100 can comprise steering steerable filter 220 in two axes.

In some embodiments, method 100 can comprise generating the data indicative of the first position by detecting viewer 38 at the first position.

In some embodiments, method 100 can comprise generating the data indicative of the first position by detecting glasses 52 worn by viewer 38 at the first position.

In some embodiments, method 100 can comprise: receiving data indicative of a first viewing orientation VO associated with the first position; and causing first viewing barrier 36 to be oriented based on the first viewing orientation VO associated with the first position.

The above description is meant to be exemplary only, and one skilled in the relevant arts will recognize that changes may be made to the embodiments described without departing from the scope of the invention disclosed. The present disclosure may be embodied in other specific forms without departing from the subject matter of the claims. The present disclosure is intended to cover and embrace all suitable changes in technology. Modifications which fall within the scope of the present invention will be apparent to those skilled in the art, in light of a review of this disclosure, and such modifications are intended to fall within the appended claims. Also, the scope of the claims should not be limited by the preferred embodiments set forth in the examples, but should be given the broadest interpretation consistent with the description as a whole.

## Claims

1. A steerable viewing system comprising:
a steerable filter (22) for placing in front of a display area (24) of a display device (26), the steerable filter (22) including a plurality of superimposed liquid crystal display (LCD) screens (30), each LCD screen (30) including a plurality of LCD elements (32) controllable between a transmissive state (32A) and a light-blocking state (32B0; and
a controller operatively coupled to the LCD screens (30) of the steerable filter (22) and configured to, using data indicative of a first position relative to the display area (24) of the display device (26), cause the states of the LCD elements (32) of the LCD screens (30) to cooperatively define:
a first viewing passage (34) extending through the steerable filter (22) and permitting viewing of the display area (24) from the first position through the steerable filter (22), the first viewing passage (34) being defined by LCD elements (32) of the LCD screens (30) in the transmissive state (32A); and
a first viewing barrier (36) adjacent the first viewing passage (34) and preventing viewing of the display area (24) from a second position different from the first position through the steerable filter (22), the first viewing barrier (36) being defined by LCD elements (32) of the LCD screens (30) in the light-blocking state (32B).

2. The system as defined in claim 1, wherein:
the first viewing passage (34) has a passage axis (P) extending through the LCD screens (30) of the steerable filter (22) and intersecting the first position; and
the first viewing barrier (36) has a barrier axis (B) extending through the LCD screens (30) of the steerable filter (22), the barrier axis (B) being substantially parallel to the passage axis (P).

3. The system as defined in claim 2, wherein the second position is apart from the passage axis (P).

4. The system as defined in claim 1, wherein:
the first viewing passage (34) has a passage axis (P) extending through the LCD screens (30) of the steerable filter (22) and intersecting the first position; and
the first viewing barrier (36) prevents viewing of the display area (24) along a direction transverse to the passage axis (P).

5. The system as defined in any one of claims 1 to 4, comprising a plurality of first viewing passages (34) and a plurality of first viewing barriers (36), the first viewing passages (34) and the first viewing barriers (36) being alternatingly disposed across at least part of the steerable filter (22).

6. The system as defined in any one of claims 1 to 5, wherein the controller is configured to:
cease causing the states of the LCD elements (32) of the LCD screens (30) to cooperatively define the first viewing passage (34) and the first viewing barrier (36); and
use data indicative of the second position to cause the states of the LCD elements (32) of the LCD screens (30) to cooperatively define:
a second viewing passage (34) extending through the steerable filter (22) and permitting viewing of the display area (24) from the second position through the steerable filter (22); and
a second viewing barrier adjacent the second viewing passage (34) and preventing viewing of the display area (24) from the first position through the steerable filter (22).

7. The system as defined in claim 6, wherein:
the first viewing barrier (36) comprises a first string of LCD elements (32) in the light-blocking state (32B), the first string of LCD elements (32) being oriented horizontally relative to a first viewing orientation associated with the first position;
the second viewing barrier (36) comprises a second string of LCD elements (32) in the light-blocking state (32B), the second string of LCD elements (32) being oriented horizontally relative to a second viewing orientation associated with the second position; and
the first viewing orientation associated with the first position is different from the second viewing orientation associated with the second position.

8. The system as defined in claim 6 or claim 7, wherein the controller is operatively coupled to the display device (26) and is configured to:
when the first viewing passage (34) and the first viewing barrier (36) are defined, cause the display area (24) of the display device (26) to display first visual content intended to be viewed from the first position; and
when the second viewing passage (34) and the second viewing barrier (36) are defined, cause the display area (24) of the display device (26) to display second visual content intended to be viewed from the second position.

9. The system as defined in claim 8, wherein the controller is configured to cause the steerable filter (22) to repeatedly alternate between:
a first mode of operation where the first viewing passage (34) and the first viewing barrier (36) are defined, and the first visual content is displayed in the display area (24); and
a second mode of operation where the second viewing passage (34) and the second viewing barrier (36) are defined, and the second visual content is displayed in the display area (24).

10. The system as defined in claim 9, wherein repeatedly alternating between the first and second modes of operation is conducted at a frequency that substantially prevents a perception of interruption of the first and second visual content by a human.

11. A method of operating a steerable viewing system comprising a steerable filter (22) disposed in front of a display area (24) of a display device (26), the steerable filter (22) including a plurality of superimposed liquid crystal display (LCD) screens (30), each LCD screen (30) including a plurality of LCD elements (32) controllable between a transmissive state (32A) and a light-blocking state (32B), the method comprising:
using data indicative of a first position relative to the display area (24) of the display device (26), causing the states of the LCD elements (32) of the LCD screens (30) to cooperatively define:
a first viewing passage (34) extending through the steerable filter (22) and permitting viewing of the display area (24) from the first position through the steerable filter (22), the first viewing passage (34) being defined by LCD elements (32) of the LCD screens (30) in the transmissive state (32A); and
a first viewing barrier (36) adjacent the first viewing passage (34) and preventing viewing of the display area (24) through the steerable filter (22) from a second position different from the first position, the first viewing barrier (36) being defined by LCD elements (32) of the LCD screens (30) in the light-blocking state (32B).

12. The method as defined in claim 11, wherein:
the first viewing passage (34) has a passage axis (P) extending through the LCD screens (30) of the steerable filter (22) and intersecting the first position; and
the first viewing barrier (36) has a barrier axis (B) extending through the LCD screens (30) of the steerable filter (22), the barrier axis (B) being substantially parallel to the passage axis (P).

13. The method as defined in claim 11, wherein:
the first viewing passage (34) has a passage axis (P) extending through the LCD screens (30) of the steerable filter (22) and intersecting the first position; and
the first viewing barrier (36) prevents viewing of the display area (24) along a direction transverse to the passage axis (P).

14. The method as defined in any one of claims 11 to 13, comprising:
ceasing to cause the states of the LCD elements (32) of the LCD screens (30) to cooperatively define the first viewing passage (34) and the first viewing barrier (36); and
using data indicative of the second position to cause the states of the LCD elements (32) of the LCD screens (30) to cooperatively define:
a second viewing passage (34) extending through the steerable filter (22) and permitting viewing of the display area (24) from the second position through the steerable filter (22); and
a second viewing barrier (36) adjacent the second viewing passage (34) and preventing viewing of the display area (24) from the first position through the steerable filter (22).

15. The method as defined in claim 14, wherein:
the first viewing barrier (36) comprises a first string of LCD elements (32) in the light-blocking state (32B), the first string of LCD elements (32) being oriented horizontally relative to a first viewing orientation associated with the first position;
the second viewing barrier (36) comprises a second string of LCD elements (32) in the light-blocking state (32B), the second string of LCD elements (32) being oriented horizontally relative to a second viewing orientation associated with the second position; and
the first viewing orientation associated with the first position is different from the second viewing orientation associated with the second position.
